# EUROPÄISCHE PATENTANMELDUNG

(11) **EP 2 418 475 A1**
(43) Veröffentlichungstag der Anmeldung: **15.02.2012**
(21) Anmeldenummer: 11005460.8
(22) Anmeldetag: 04.07.2011
(51) Int. Cl.: G01N 23/06, G01N 23/18

(54) **Verfahren zur Durchstrahlungsprüfung von Bauteilen**

(30) Priorität: 09.08.2010 DE 102010033761
(71) Anmelder: Rolls-Royce Deutschland Ltd & Co KG, 15827 Blankenfelde-Mahlow (DE)
(72) Erfinder: Schreiber, Karl, 15838 Am Mellensee (DE); Geitner, Josef, 14532 Stahnsdorf (DE)
(74) Vertreter: Weber, Joachim

(57) **Zusammenfassung**

Bei der Durchstrahlungsprüfung von Bauteilen mittels Röntgenstrahlen wird zur besseren, vorzugsweise automatisierten Fehlererkennung eine unebene Oberflächentopographie (2) des Bauteils (1) mit einer Glättungsschicht (8) aus einem Material, dessen volumenspezifische Strahlungsabsorption mit der des Bauteilwerkstoff übereinstimmt, geglättet, so dass eine Verringerung der Strahlungsabsorption oder eine Erhöhung der Strahlungsintensität aufgrund einer unebenen Oberflächentopographie verhindert und nur eine durch innere Materialfehler bedingte Schwärzung des Röntgenfilms erzeugt wird.

## Beschreibung

Die Erfindung betrifft ein Verfahren zur Durchstrahlungsprüfung von Bauteilen mittels Röntgen- oder Gammastrahlen auf der Grundlage einer durch Materialfehler unterschiedlichen Strahlungsabsorption und Intensität der nach der Durchstrahlung des Bauteils auf einen Röntgenfilm auftreffenden Strahlung.

Die Durchstrahlungsprüfung ist ein bildgebendes Verfahren zur zerstörungsfreien Werkstoffprüfung, bei der mit Hilfe eines geeigneten Strahlers, zum Beispiel einer Röntgenröhre, ein zu prüfendes Bauteil durchstrahlt wird und auf einem Röntgenfilm ein Projektionsbild des Bauteils dargestellt wird. Aufgrund unterschiedlicher Strahlungsabsorption und entsprechend unterschiedlicher Strahlungsschwächung können in dem Bauteil vorhandene Fehlstellen, Einschlüsse, Seigerungen, Gasblasen, Risse oder Fügungsfehler in Form einer durch die größere Strahlungsintensität bedingten stärkeren Schwärzung des Röntgenfilms erkennbar gemacht werden.

Die Erkennbarkeit von Materialfehlern wird durch eine Randunschärfe, das heißt ein rings um die Fehlerstelle vorhandenes Halbschattengebiet, und einen geringen Kontrast (Schwärzungsunterschied), die durch eine Streustrahlung der auf eine unregelmäßige Bauteiloberfläche auftreffenden elektromagnetischen Wellen bedingt sein können, verringert. Eine unregelmäßige Oberflächenstruktur des zu untersuchenden Bauteils, beispielsweise in Form von Oberflächenporen, führt jedoch in erster Linie zu verminderter Strahlungsabsorption und dementsprechend hoher Strahlungsintensität. Die dadurch auf dem Röntgenfilm erzeugten Schwärzungen stellen jedoch keine relevanten Materialfehler dar, sondern verfälschen vielmehr das Prüfungsergebnis bzw. lassen eine exakte Erkennung von Materialfehlern bzw. eine sichere automatische Auswertung der Röntgenfilme nicht zu.

Der Erfindung liegt die Aufgabe zugrunde, ein Verfahren zur Durchstrahlungsprüfung von Bauteilen anzugeben, das eine sichere Erkennung von in dem Bauteilmaterial vorhandenen Fehlstellen gewährleistet.

Erfindungsgemäß wird die Aufgabe mit einem Verfahren gemäß den Merkmalen des Patentanspruchs 1 gelöst.

Vorteilhafte Weiterbildungen und zweckmäßige Ausgestaltungen der Erfindung sind Gegenstand der Unteransprüche.

Die Durchstrahlungsprüfung von Bauteilen mittels Röntgen- oder Gammastrahlen erfolgt auf der Grundlage einer durch Materialfehler im Bauteil veränderten Strahlungsabsorption und Intensität der nach der Durchstrahlung des Bauteils auf einen Röntgenfilm auftreffenden Strahlung und dessen durch die Strahlungsintensität beeinflusster Schwärzung. Der Kern der Erfindung besteht darin, dass eine unebene, ebenfalls unterschiedliche Strahlungsintensitäten bewirkende Oberflächentopographie des Bauteils mit einer Glättungsschicht aus einem Material, dessen volumenspezifische Strahlungsabsorption mit der des Bauteilwerkstoffs übereinstimmt, geglättet bzw. ausgeglichen wird, so dass eine Verringerung der Strahlungsabsorption oder eine Erhöhung der Strahlungsintensität aufgrund einer unebenen Oberflächengeometrie verhindert und nur eine durch innere Materialfehler bedingte Schwärzung des Röntgenfilms erzeugt wird. Dadurch ist eine exakte, vorzugsweise auch automatisierte Durchstrahlungsprüfung möglich, die insbesondere bei sicherheitsrelevanten Bauteilen von ausschlaggebender Bedeutung ist.

In weiterer Ausbildung der Erfindung besteht die auf die Bauteiloberfläche aufgebrachte Glättungsschicht bzw. Ausgleichsschicht aus einem plastisch verformbaren Material mit in dieses eingebundenem Metallpulver.

Der Metallpulveranteil in der Glättungsschicht ist maximal so hoch, dass eine noch ausreichende Verformbarkeit des Materials zur Erzeugung einer glatten, ebenen Oberflächenkontur gewährleistet ist.

Die Glättungsschicht ist so ausgebildet, dass sie nach der Durchstrahlungsprüfung wieder von dem Bauteil entfernt bzw. abgezogen werden kann.

Mit den erfindungsgemäßen Verfahrensvarianten können Materialfehler wie Fehlstellen, Einschlüsse, Seigerungen, Gasblasen, Risse oder Fügungsfehler sowohl visuell als auch in einem automatisierten Verfahren exakt ermittelt werden.

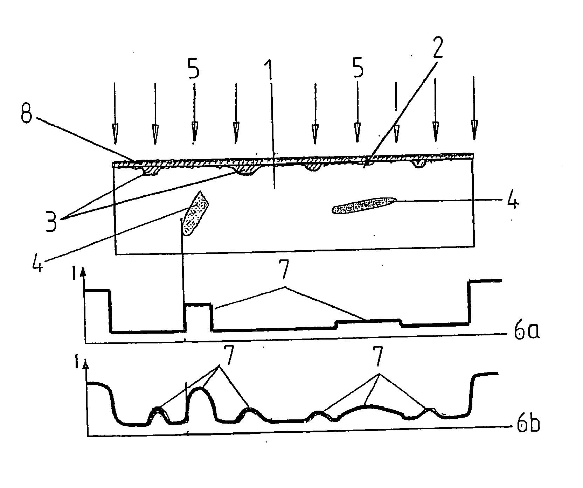

Ein Ausführungsbeispiel der Erfindung wird in Verbindung mit der Zeichnung, deren einzige Figur schematisch ein entsprechend vorbereitetes Bauteil während der Durchstrahlungsprüfung zeigt, näher erläutert.

Das in stark vereinfachter Darstellung wiedergegebene, gemäß dem Ausführungsbeispiel aus 18.8-Chrom-Nickel-Stahl bestehende Bauteil 1 weist eine unebene Oberflächentopographie 2 mit Vertiefungen 3 auf. Im Innern des zu prüfenden Bauteils 1 befinden sich zwei Fehlstellen 4. Das Bauteil 1 wird mit ― durch Pfeile 5 gekennzeichneten - Röntgenstrahlen bestrahlt, die das Bauteil durchdringen und auf einem unterhalb des Bauteils angeordneten Röntgenfilm 6a bzw. 6b eine der Strahlungsintensität I entsprechende Schwärzung 7 des Röntgenfilms 6 bewirken.

Wie die Zeichnung zeigt, ist die unebene Oberflächentopographie 2 des Bauteils 1 mit einer Glättungsschicht 8 abgedeckt, die aus einer leicht formbaren Masse mit in diese eingebettetem Metallpulver besteht. Der Metallpulveranteil ist - mit beispielsweise 65% - maximal so groß, dass die Pulverpartikel nicht aneinander stoßen und somit die Masse gut formbar ist und Oberflächenunebenheiten ausgeglichen werden können, das heißt, eine glatte, ebene Bauteiloberfläche erzeugt wird. Das Metallpulver besteht z. B. aus dem gleichen Material wie der Bauteilwerkstoff, das heißt aus 18.8 Chrom-Nickel-Stahl, sowie aus weiteren Metallpulverzusätzen, so dass die Glättungsschicht 8 die gleiche Röntgenstrahlabsorption wie das Grundmaterial des Bauteils 1 aufweist.

Der in der Zeichnung untere Röntgenfilm 6b zeigt schematisch die Intensität der Röntgenstrahlen und die entsprechenden Schwärzungen auf dem Röntgenfilm 6b nach dem Durchdringen des nicht mit einer Glättungsschicht versehenen Bauteils 1. Aufgrund der unebenen Oberflächentopographie 2 ist die Strahlintensität I auch im Bereich der Vertiefungen 3 hoch. Auf dem Röntgenfilm 6b ist demzufolge eine Vielzahl von - zudem nicht scharf abgegrenzten - Schwärzungen 7 erkennbar, die eine automatische Auswertung des Röntgenfilms 6b und eine eindeutige - auch randscharfe - Identifizierung der durch Fehlstellen 4 bewirkten Schwärzungen 7 nicht zulassen.

Der in der Zeichnung obere Röntgenfilm 6a zeigt die Intensität der Röntgenstrahlen 5 und die entsprechenden Schwärzungen auf dem Röntgenfilm 6a nach dem Durchdringen des mit der oben beschriebenen Glättungsschicht 8 versehenen Bauteils 1. Die Röntgenstrahlen 5 werden jetzt aufgrund der Glättungsschicht 8 auch im Bereich der unebenen Oberflächentopographie in gleichem Maße wie in dem Grundmaterial des Bauteils 1 absorbiert. Eine erhöhte Strahlungsintensität I und eine zudem schärfer abgegrenzte Schwärzung des Röntgenfilms 6a ist nur an den Stellen zu verzeichnen, an denen die Röntgenstrahlen 5 die Fehlstellen 4 in der Wand des Bauteils 1 passieren. Die Fehlstellen 4 sind daher - auch bei automatischer Auswertung des Röntgenfilms 6a - eindeutig identifizierbar, so dass eine erhöhte Sicherheit bei der Nutzung von beispielsweise in der Luftfahrt eingesetzten sicherheitsrelevanten Bauteilen gewährleistet ist.

Nach der Durchstrahlungsprüfung kann die Glättungsschicht 8 wieder von der Oberfläche des Bauteils abgezogen werden.

### Bezugszeichenliste

- 1: Bauteil
- 2: unebene Oberflächentopographie
- 3: Vertiefungen
- 4: Fehlstellen, Materialfehler
- 5: Röntgenstrahlen
- 6a: oberer Röntgenfilm
- 6b: unterer Röntgenfilm
- 7: Schwärzung
- 8: Glättungsschicht
- l: Strahlungsintensität

## Patentansprüche

1. Verfahren zur Durchstrahlungsprüfung von Bauteilen mittels Röntgen- oder Gammastrahlen auf der Grundlage einer durch Materialfehler im Bauteil unterschiedlichen Strahlungsabsorption und Intensität der nach der Durchstrahlung des Bauteils auf einen Röntgenfilm auftreffenden Strahlung, **dadurch gekennzeichnet, dass** eine unebene Oberflächentopographie (2) des Bauteils (1) mit einer Glättungsschicht (8) aus einem Material, dessen volumenspezifische Strahlungsabsorption mit der des Bauteilwerkstoff übereinstimmt, geglättet wird, so dass eine Verringerung der Strahlungsabsorption oder eine Erhöhung der Strahlungsintensität aufgrund einer unebenen Oberflächentopographie verhindert und nur eine durch innere Materialfehler bedingte Schwärzung des Röntgenfilms erzeugt wird, wobei die auf Bauteiloberfläche aufgebrachte Glättungsschicht (8) aus einem plastisch verformbaren Material mit in dieses eingebundenem Metallpulver besteht und die gleiche Röntgenstrahlungsabsorption wie das Grundmaterial des Bauteils (1) aufweist.

2. Verfahren nach Anspruch 1, **dadurch gekennzeichnet, dass** der Metallpulveranteil in der Glättungsschicht maximal so hoch ist, dass die Verformbarkeit des Materials gewährleistet ist.

3. Verfahren nach Anspruch 1, **dadurch gekennzeichnet, dass** die Glättungsschicht nach der Durchstrahlungsprüfung wieder von dem Bauteil abgezogen wird.

4. Verfahren nach einem der vorhergehenden Ansprüche, **dadurch gekennzeichnet, dass** Materialfehler wie Fehlstellen, Einschlüsse, Seigerungen, Gasblasen, Risse oder Fügungsfehler visuell oder automatisch erfasst werden
